# EUROPEAN PATENT SPECIFICATION

(11) **EP 2 724 986 B1**
(45) Date of publication and mention of the grant of the patent: **22.08.2018**
(21) Application number: 12190005.4
(22) Date of filing: 25.10.2012
(51) Int. Cl.: C02F 1/00, E03F 5/04

(54) **A device and a method for removing pollutants from a liquid**
Vorrichtung und Verfahren zum Entfernen von Verschmutzungen aus einer Flüssigkeit
Dispositif et procédé pour éliminer des polluants d'un liquide

(43) Date of publication of application: 30.04.2014
(73) Proprietor: OKsave Capital AB, 214 63 Malmö (SE)
(72) Inventor: Päiviö, Asko, 21463 Malmö (SE)
(74) Representative: Norris, Timothy Sweyn

(56) References cited:
- WO-A1-03/035990
- US-A1- 2002 159 838
- US-A1- 2004 016 692
- US-A1- 2009 173 699
- US-B1- 6 562 233

## Description

### TECHNICAL FIELD

The invention relates to a device and a method for removing pollutants from a liquid. This type of devices and methods are used for removing pollutants from liquids, such as wastewater, stormwater or similar liquids, by filtering inside a drain, stormdrain or similar. Such devices can also be used for filtering surface water, such as filtering off pollutants from the surface of a river, lake or sea.

Wastewater includes liquid waste discharged by e.g. industry, hospitals, vehicles, aircraft, boats, ships etc., and which is suitable for filtering. Such wastewater can comprise a wide range of pollutants.

Stormwater, also called urban runoff, is surface runoff of rainwater, melted snow or ice, wash water or similar from different types of surfaces, such as roofs, roads, parking lots, sidewalks, airports and similar. Water from such surfaces generally contains pollutants, such as petroleum products, oil, gasoline, heavy metals, trash, fertilizers, pesticides and other pollutants. During rain these surfaces carry polluted stormwater to stormdrains. Stormdrains can be connected to a drainage system for discharge into receiving surface waters, such as a canal, river, lake, sea, or other surface water, with or without treatment of the stormwater before discharge.

Drains generally comprise a pipe, such as a vertical pipe, having an inlet, such as a horizontal grated inlet or a side inlet. The pipe can be connected to a sewer or drainage system. Such drains can comprise a drain trap, catchbasin or similar.

### PRIOR ART

There are different types of devices for removing pollutants from a liquid by means of filtering in the prior art. One type of such prior art devices comprise a filter for positioning in a stormdrain. However, there is a need for an improved device for removing pollutants from a liquid by means of filtering.

One problem with such prior art devices for removing pollutants is that they can be inefficient and do not remove pollutants satisfactorily.

Another problem with such prior art devices for removing pollutants is that it can be difficult to install them inside a drain and also to remove them from the drain, e.g. to be replaced.

In a published United States patent application US 20020159838A1 (Allard Douglas Paul; "*Trench drain filtration system*"), there is described a trench drain filtration system. In accordance with the system, a filter body is dimensioned to fit within a trench drain forming a trough or reservoir obstructing at least a portion of the trench drain. The filter body is supported by a filter body support dimensioned to cooperatively engage with the trench drain and with the filter body to substantially maintain said filter body in a pre-selected position within the inlet. Further, one or more connectors removably connect the filter body to the filter body support.

In a published United States patent application US 20090173699A1 (Todd Wacome; "*Treating Runoff*"), there are described systems and methods for treating water passing through a catch basin may include first and second filters. The system for treating water is configured to treat water passing through a catch basin wherein, the system comprises a first filter comprising an open end, a sidewall portion, and a closed end opposite the open end, the open end of the first filter removably mounted below an inlet of the catch basin and a second filter extending from a first end portion having a first perimeter to a second end portion having a second perimeter larger than the first perimeter. The first end portion of the second filter removably mounted to define an opening below the inlet of the catch basin and the second end portion of the second filter removably secured to an inner surface of the catch basin which is spaced apart from the inlet of the catch basin, such that the second filter defines a surface separating an inner portion of a cavity of the catch basin from an outer portion of the cavity of the catch basin.

In a published United States patent application US 6562233B1 (Pactec, Inc.; "*Storm drain line with riser* 2"), there is described a drain filtering system having a filter placed within a basket which is suspended from frame positioned underneath a drain grate atop the inlet to a storm drain. The filter is constructed from materials that filter out heavy metals, sediments, debris and hydrocarbons from the water passing through. Further, the system includes a riser tube having an inlet and an outlet, where the inlet is positioned inside the filer, and the outlet is positioned external to the filter. The inlet is placed close to the top of the filter to allow a bypass fluid path for periods of high flow.

In a published United States patent application US 20040016692A1 (Spider Environmental, Inc.; "*Framed storm drain insert sediment filter*"), there is described storm water sewer systems, and more particularly a drain insert adapted to prevent sediment or debris such as leaves, sand, stones, gravel and, in some cases, petroleum products, from entering into the storm water removal system. The system has three primary features: (1) a rectangular collar having a centrally located circular cutout with sewn loops formed on the outer edges of the collar; (2) a filter bag having top edges attached to the rectangular collar along the periphery of the circular cutout so that the bag is inserted within the cutout and drops below the level of the collar; and (3) a heavy gauge steel wire inserted within the sewn loops of the rectangular collar forming a structural frame along the periphery of the rectangular collar. Further, the structural frame is preferably formed with overlapping portions coupled together with a retaining means. The overlapping portions are slidably moved relative to one another to change the first and/or second dimension of the frame so that the filter can fit within catch basins openings of various measurements

In a published PCT patent application WO 2003035990A1 (Lillemor Eriksson; "*Filter*"), there is described a method of providing an efficient separation and collection of pollutants in waste water by means of a separating and collecting apparatus. The method include first and second stages of filtering inner and outer liquid in which permeable filter containers are used, which are formed of fabric, having comparatively more open and less open structure, respectively. The effective filtering area of both the first and the second stages extends substantially from an upper to a lower end of the separating apparatus where they are integrated. A very high filtering capacity without any danger of clogging is obtained in this manner, by being able to separate and collect solid pollutants of different size over practically the entire filter surface in the different stages. Thereby, a very high flow through capacity is thereby provided and maintained during a long period of time. Further, the invention also relates to a separating and collecting apparatus for providing an efficient separation and collection of pollutants in waste water.

### SUMMARY OF THE INVENTION

An object of the present invention is to avoid the problems of the prior art. The device and method according to the present invention result in a reliable and efficient removal of pollutants from a liquid inside a drain by means of filtering as well as easy installation and replacement. The device and method according to the present invention also result in easy handling and transportation and can be used for efficient filtering of surface waters.

The present invention relates to a device for removing pollutants from a liquid inside a drain, wherein the device comprises a filter element and a carrier for carrying the filter element, wherein the filter element is fastened to the carrier and is foldable, characterised in that the carrier comprises an expandable element arranged for expansion in at least a radial direction inside the drain and the expandable element being arranged so that the device is adjustable between the first volume state and the second volume state, wherein the second volume is greater than the first volume. The carrier is a floating carrier, wherein the expandable element provides floating properties of the device. The filter element is folded when the expandable element is in a non-expanded state and unfolded when the expandable element is in an expanded state, and due to expansion of the expandable element the filter element is unfolded, wherein, as the expandable element is expanded. The filter element is unfolded radially to cover an entire part of a cross-section area of the drain. Further, the device comprises monitoring means for optically monitoring an amount of one or more selected pollutants cumulated in the filter element.

The expandable element can comprise one or more inflatable elements which form inflatable compartments in the carrier, wherein such inflatable compartments are interconnected by non-return valves.

The device can comprise a gas cartridge and wherein the expandable element is connected to said gas cartridge for inflation thereof.

The carrier can comprise a foldable rib structure connected to the expandable element wherein the filter element being connected to said rib structure. The foldable rib structure is arranged to at least unfold when the expandable element is expanded. Optionally, the carrier may comprise a weight at the bottom to stabilize the device in water inside the drain.

Further, the filter element can comprise an absorbing material, a heavy metal filtering peat and activated carbon.

The device can comprise an RFID transponder and monitoring means for optically monitoring an amount of one or more selected pollutants cumulated in the filter element. By monitoring the optical properties of the filter element the type and amount of pollutants collected therein can be monitored and the filter element can be replaced when full. For example, the filter element is detachable from the carrier, wherein the filter element can be replaced and the carrier can be reused. Also, the device can comprise a GPS for locating the device.

The invention also relates to a method of removing pollutants from a liquid in a drain, including the steps of:
a) providing a foldable filter element,
b) providing a carrier for carrying the filter element, wherein the
   carrier comprises an expandable element, and the carrier is a floating carrier,
c) arranging the foldable filter element on the floatable carrier,
d) arranging the carrier with the filter element in a desired position, the expandable element being in a non-expanded state and the filter element being in a folded state, and inserting a device comprising the foldable filter element and the carrier
e) at the desired position inside the drain expanding the expandable element in a radial direction to an expanded state to increase the volume of the carrier from a first volume state to a second volume state, wherein the second volume is greater than the first volume, and unfold the filter element,
f) filtering the liquid inside the drain at the desired position by means of the unfolded filter element, and
g) monitoring an amount of one or more selected pollutants cumulated in the filter element, wherein the monitoring further comprises:
   (i) detecting when the filter element is full; and
   (ii) sending a signal to a central monitoring unit when a predetermined amount of a pollutant has been exceeded or a sudden change of optical characteristics of the filter element has been detected.

Further characteristics and advantages of the present invention will become apparent from the description of the embodiments below, the appended drawings and the dependent claims.

### BRIEF DESCRIPTION OF THE DRAWINGS

The invention will now be described more in detail with the aid of embodiments and with reference to the appended drawings, in which:
- Figs. 1-2: are schematic views of a device for removing pollutants from a liquid in accordance with a basic embodiment of the invention, wherein the device is being inserted and installed in a drain in the form of a stormdrain,
- Figs. 3-6: is a series of schematic views of a device for removing pollutants from a liquid in accordance with an alternative embodiment of the invention, wherein the device is being inserted and installed in the drain,
- Figs. 7-10: is a series of schematic views of the device according to other alternative embodiments of the invention, and
- Fig. 11: is a schematic view of a device for removing pollutants from a liquid in accordance with yet another embodiment of the invention, wherein the device is installed in the drain.

### DETAILED DESCRIPTION

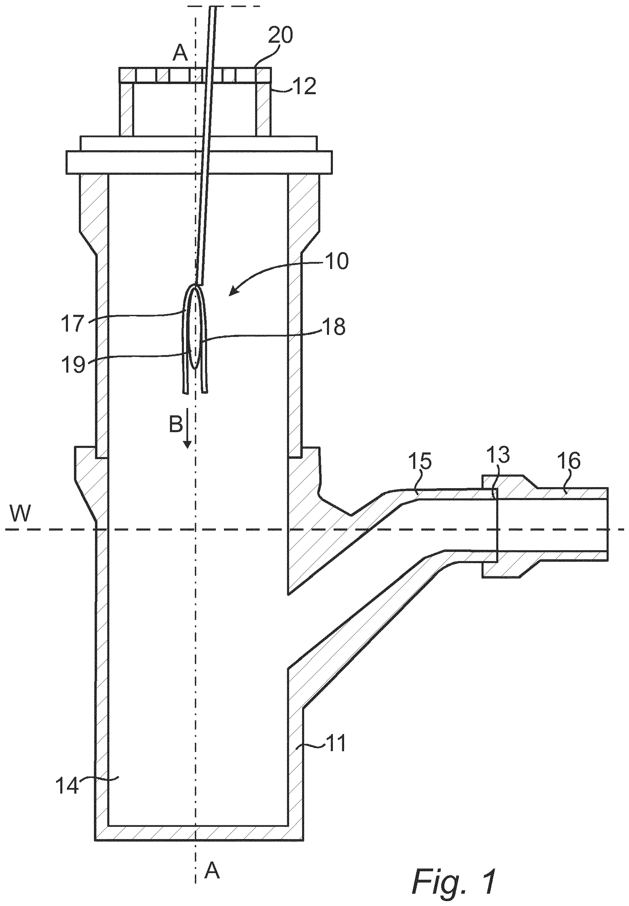

With reference to Fig. 1 a device 10 for removing pollutants from a liquid according to a basic embodiment of the present invention is illustrated schematically. In Fig. 1 the device 10 is arranged in a drain 11 having an inlet 12 for incoming liquid and an outlet 13 for discharging liquid. The drain 11 is, for example, a wastewater drain, stormdrain or similar. The drain 11 comprises a centre axis A, which centre axis A is illustrated by means of dash and dotted lines in the drawings. For example, the drain 11 is formed by one or more interconnected pipes, forming a drain trap or a catchbasin 14. In the drawings, the water level is indicated with a dashed line W. Alternatively, the device 10 is arranged for filtering surface water, wherein the device is arranged at sea, in a lake, river or similar, for filtering off pollutants from the surface thereof.

Hence, according to the illustrated embodiment the device 10 is arranged for filtering polluted liquid, such as wastewater, stormwater or similar, inside the drain 11 to remove pollutants from the liquid before discharge from the drain 11. The drain 11 according to Fig. 1 comprises an outlet pipe 15 forming a drain trap or water trap in a conventional manner. In the drawings the drain 11 is arranged in a vertical direction and extends axially, wherein the outlet pipe 15 extends radially. A portion of the outlet pipe 15 extends upwards, wherein the water seals the inlet 12 of the drain 11 from the outlet 13. In Fig. 1, the surface of the water inside the drain 11 is indicated by the dashed line W. Alternatively, the drain 11 is arranged without a water trap. The outlet 13 is connected to a subsequent drain system 16, such as a sewer or similar.

The device 10 comprises a filter element 17 and a carrier 18 for carrying the filter element 17. The filter element 17 is arranged for filtering the liquid to remove pollutants therefrom. The filter element 17 is fastened to the carrier 18 and is foldable. For example, the filter element 17 is formed by a flexible material, such as a cloth, woven or non-woven fibre material or similar.

The carrier 18 comprises an expandable element 19, such as an inflatable element, foaming material or similar. For example, the expandable element 19 is arranged in a flexible, inflatable and gas-tight material. In Fig. 1 the expandable element 19 forms the carrier 18 and is in a non-expanded state while the filter element 17 is in a folded state to facilitate introduction into the drain 11. In Fig. 1 the device 10 is inserted in the drain 11 through a grated drain cover 20 as illustrated by means of the arrow B. For example, the device 10 is lowered down the drain 11, such as by means of a tool, a rope or similar, to a desired position inside the drain 11. For example, the filter element 17 is fastened on a top portion of the carrier 18, wherein the filter element 17 is hanging down the sides of the carrier 18 when lowered into the drain 11.

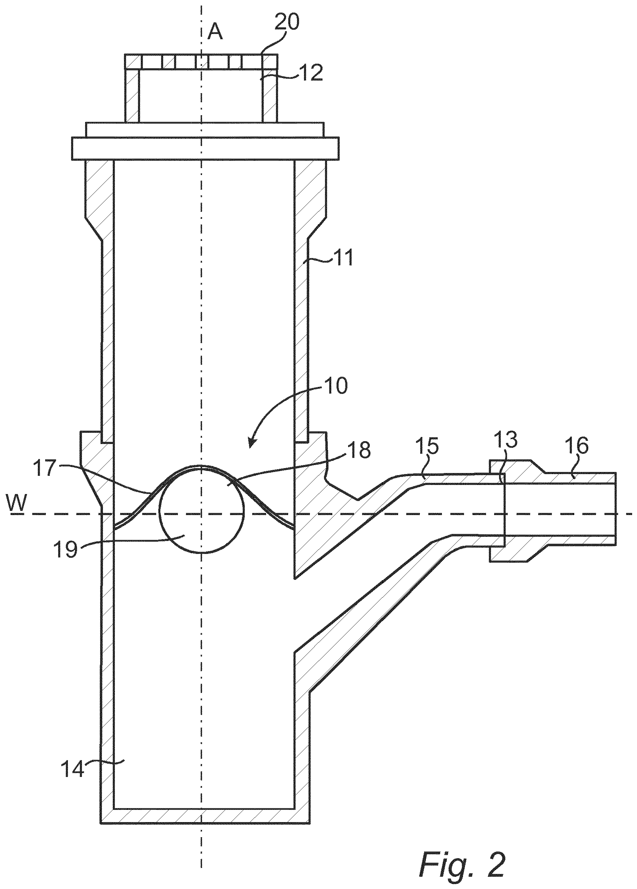

With reference to Fig. 2, the device 10 has been installed inside the drain 11. When installed in the drain 11 the expandable element 19 is in its expanded state, wherein the volume of the device 10 is increased. Hence, the device 10 is adjustable from a first volume state, as illustrated in Fig. 1, to a second volume state, as illustrated in Fig. 2, wherein the second volume is greater than the first volume. The expandable element 19 is arranged for expansion in at least a radial direction inside the drain 11. For example, the expandable element 19 is also arranged for expansion in the axial direction. Due to the expansion of the expandable element 19 the filter element 17 is unfolded. In this context the filter element 17 is considered folded when the expandable element 19 is in the non-expanded state and unfolded when the expandable element 19 is in the expanded state. As the expandable element 19 is expanded the carrier 18 is widened and the filter element 18 is unfolded radially outwards and upwards to cover at least a substantial part of a cross-section area of the drain 11. In Fig. 1 the carrier 18 is a floating carrier, wherein the expandable element 19, for example, provides floating properties of the device 10. For example, the expandable element 19 is inflated with air or any other suitable gas by means of a gas cartridge. Alternatively, the expandable element 19 is inflated through a valve by compressed air by means of a compressor or similar. For example, the expandable element 19 is adjustable between the expanded state and the non-expanded state, wherein the expandable element 19 can be set in its non-expanded state for removing the device 10 from the drain 11. For example, the expandable element 19 comprises a valve for inflating and deflating the expandable element 19.

The expandable element 19 is, for example, expandable to any desired and suitable shape, such as cylindrical, spherical, ring-shape, conical, etc.

For example, the filter element is arranged for covering the entire or substantial part of the cross-section area in the drain 11. Liquid, such as wastewater or stormwater, entering the drain 11 through the inlet 12 will 15 pass the filtering element 17, wherein pollutants are removed depending on the filtering properties of the filtering element 17.

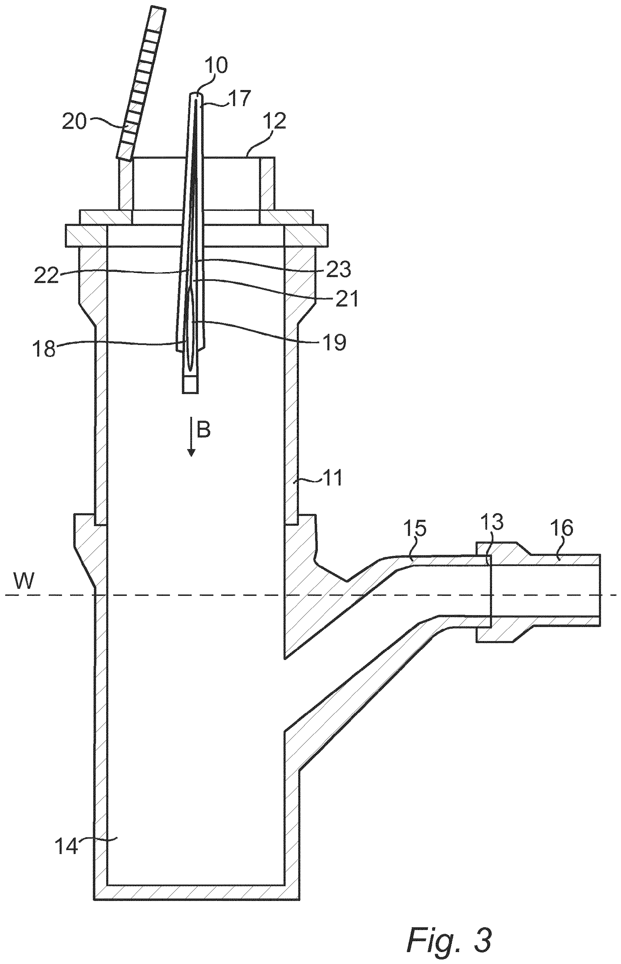

With reference to Figs. 3-6 an alternative embodiment of the invention is illustrated. In Fig. 3 the device 10 is introduced into the drain 11, such as by lowering in the axial direction as described with reference to Fig. 1, which is illustrated by the arrow B. In the embodiment of Figs. 3-6 the carrier 18 comprises the expandable element 19 and a foldable structure 21, such as a foldable rib structure or similar, arranged in abutment to the filtering element 17. For example, the foldable structure 21 is arranged for folding and unfolding like an umbrella when the expandable element 19 is expanded. Alternatively, the foldable structure 21 is arranged to at least unfold when the expandable element 19 is expanded. In Fig. 1 the expanded element 19 is in its non-expanded or deflated state, wherein the foldable structure 21 and the filter element 17 are folded. In the illustrated embodiment, the expandable element 19 is connected to a first end portion of the foldable structure 21, wherein an opposite second end portion is arranged with a pivot. For example, the first end portion is a lower end portion, wherein the second end portion is a top end portion.

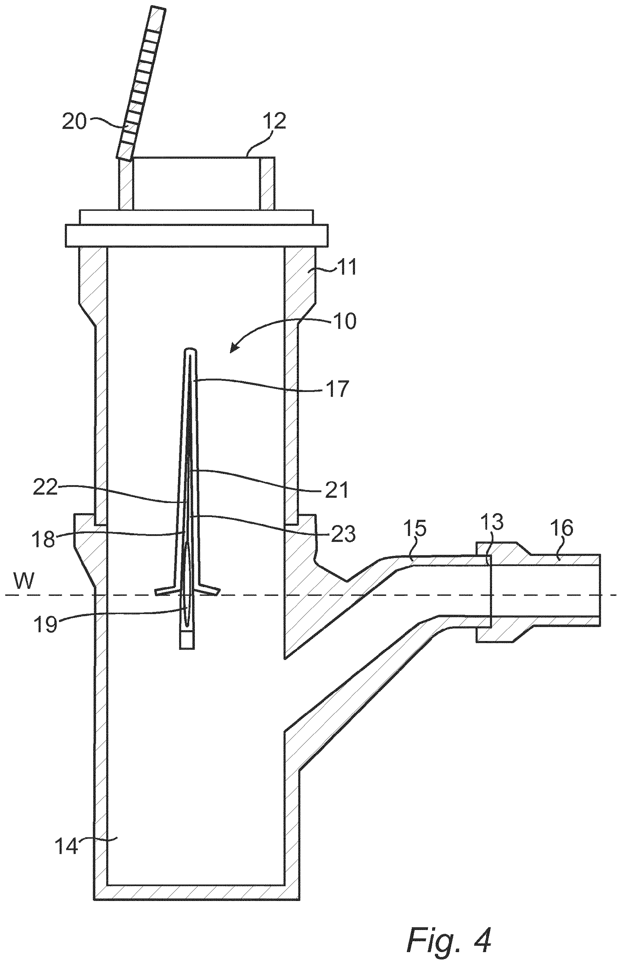

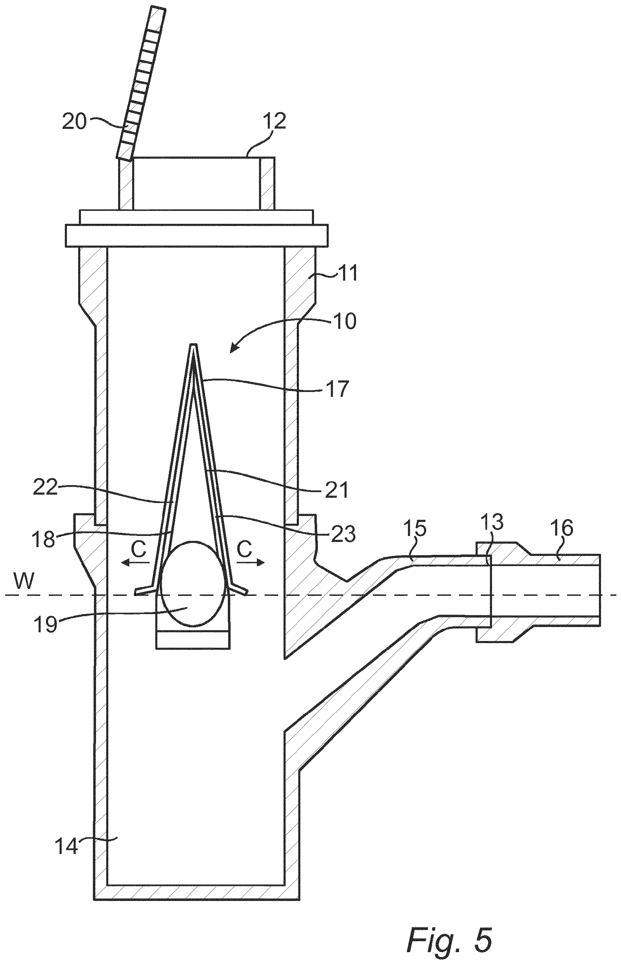

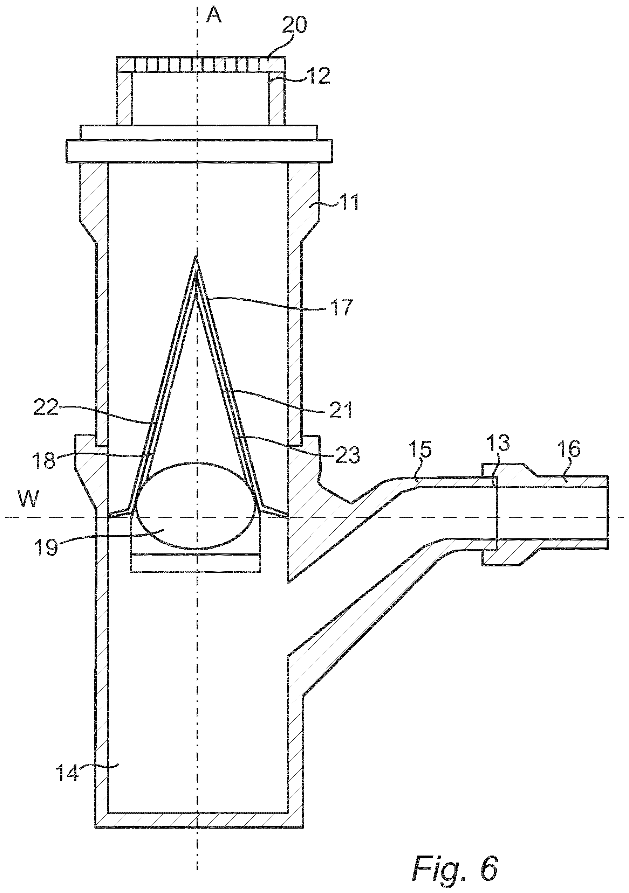

In Fig. 4 the device has been positioned inside the drain 11 at the desired position, such as at the water level W. Then, the expandable element 19 is expanded, which is indicated by the arrows C in Fig. 5, such that the first end of the foldable structure 21 is expanded and the foldable structure 21 is unfolded. For example, a first rib 22 of the foldable structure 21 is pivotably connected to a second rib 23 of the foldable structure 21, in the second end portion thereof. The ribs 22, 23 carry the filter element 17 and are, for example, arranged in contact with the filter element 17. For example, the filter element 17 covers the second end portion of the foldable structure 21 and extends along the ribs 22, 23. For example, the filter element 17 is folded in between the ribs 22, 23 in the folded state. The ribs 22, 23 are connected to the expandable element 19 at the opposite first end portion. When the expandable element 19 is expanded the ribs 22, 23, at the first end portion of the structure 21, are forced apart in a radial direction, wherein the filter element 17 is unfolded. With reference to Fig. 6 the device 10 has been installed in the drain 11, wherein the expandable element 19 is entirely expanded. In the embodiment of Figs. 3-6 the carrier 18 is a floating carrier, wherein a portion of the carrier 18 is immersed in the water and is below the water level Wand is arranged for carrying the filter element 17, so that the filter element 17 or at least a top portion thereof is arranged above the water line W inside the drain 11. For example, the carrier 18 comprises a weight at the bottom to stabilize the device 10 in the water inside the drain 11.

In the embodiment of Figs. 3-6 the structure 21 is tapered or cone shaped when unfolded. Hence, the structure 21 is tapered in the axial direction, wherein a wide portion of the structure 21 is located in the bottom, e.g. at the water level W, and the narrow portion of the structure 21 is located in the top towards the drain inlet 12. According to one embodiment, which is not illustrated in the drawings, the surface of the filter element 17 arranged on the tapered structure 21 is provided with helical grooves, wherein the device 10 is rotated when water and/or trash falling down from the inlet 12 hit the filter element 17.

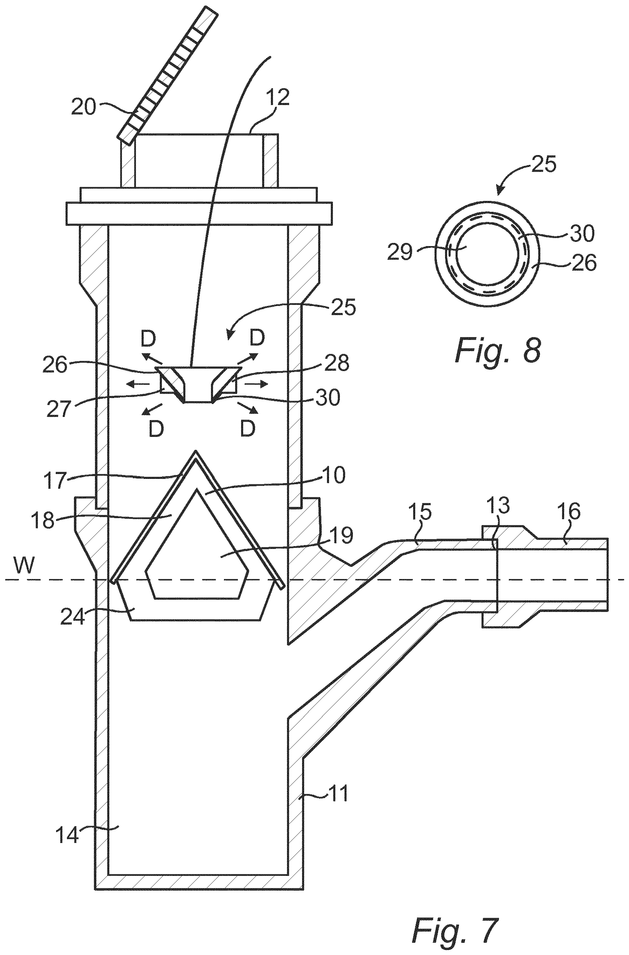

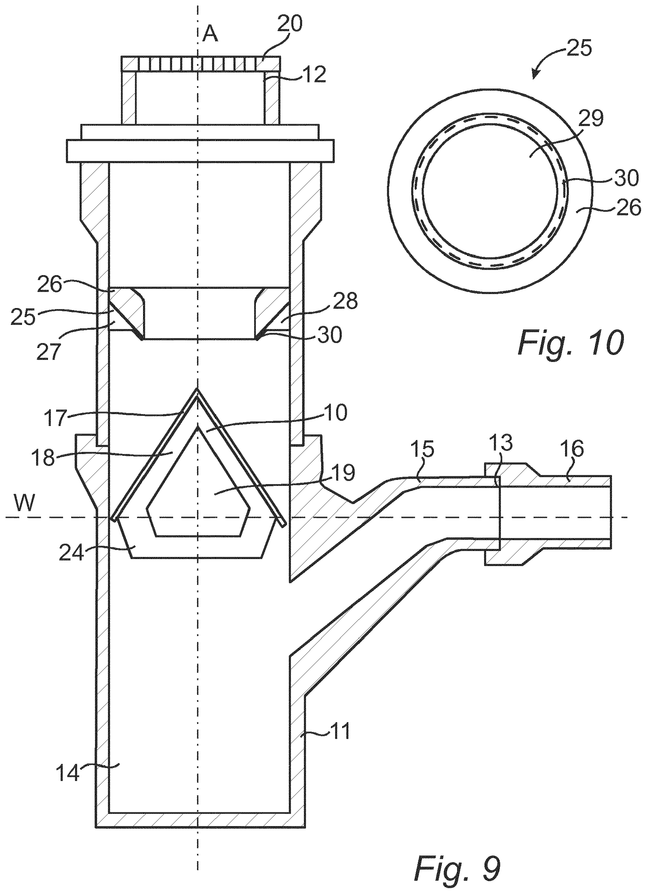

With reference to Figs. 7 and 9 another embodiment of the device 10 is illustrated. The device 10 comprises the floating carrier 18 with the tapered structure 21 and the expandable element 19. The filter element 17 is arranged on the structure 21. In Figs. 7 and 8 the structure 21 is provided with a tapered base portion 24, wherein the base portion 24 is tapered downwards in the axial direction. The tapered base portion 24 of the structure 21 is arranged so that the device 10 is pushed upwards when water inside the drain 11 freezes to ice. Hence, the wider part of the tapered base portion is arranged at the top, wherein the lowermost part is narrower.

In Figs. 7-10 also a device 25 for removing pollutants from a liquid according to one alternative embodiment is illustrated. The device 25 comprises a filter element 26 and a carrier 27 for carrying a filter element 26. The carrier 27 comprises an expandable element 28, such as an inflatable element. The filter element 26 is foldable. For example, the filter element 26 is formed in a flexible material. Hence, the device 25 is adjustable from a first volume state to a second volume state in a corresponding manner as described above. Consequently, the device 25 is arranged to be lowered into the drain 11 when the expandable element 28 is in its non-expanded state and the filter element 26 is in its folded state, so that the device 25 is in its smaller first volume state. The device 25 is lowered to the desired position inside the drain 11, such as by means of a tool, rope or similar. For example, the device 25 is lowered to a position above the water line W, wherein the device 25 is arranged for installation in a position between the water line W and the drain inlet 12. Then, the expandable element 28 is expanded, which is illustrated by the means of the arrows D in Fig. 7, to an expanded state as illustrated in Fig. 9. Hence, the carrier 27 is arranged for fastening the device 25 to the inner wall of the drain 11 by expansion, so that the device 25 is installed by friction against said inner wall. For example, the carrier 27 is made of or comprises a material having high friction for fastening towards the drain wall when the expandable element 28 is expanded, such as by inflation. Also the device 25 according to Figs. 7-10 can be provided with a valve and/or a gas cartridge for inflation. The carrier 27 is ring-shaped, which is illustrated in Figs. 8 and 10, wherein the device 25 is illustrated in the axial direction from above. In the embodiment of Figs. 7-10 also the filter element 26 is ring-shaped, wherein the device 25 is arranged with a central aperture 29, through which liquid and trash can pass. For example, a plurality of devices 25 is arranged in the drain 11, one after the other. For example, a plurality of devices 25 is arranged in a vertical or horizontal pipe of the drain 11. For example, the device 25 is used together with the device 10 arranged at the water level W in the drain 11, wherein the two devices 10, 25 are used in combination. The device 25 comprises a guiding flange 30 for guiding down-falling liquid towards the centre of the drain 11 and towards the centre of the device 10 arranged at the water level W. For example, the flange 30 is arranged at the inner side of the carrier 27, around the circumference of the aperture 29 and is inclined downwards and inwards for directing incoming liquid towards the top of the tapered filter element 17 of the device 10 arranged partially immersed in the water.

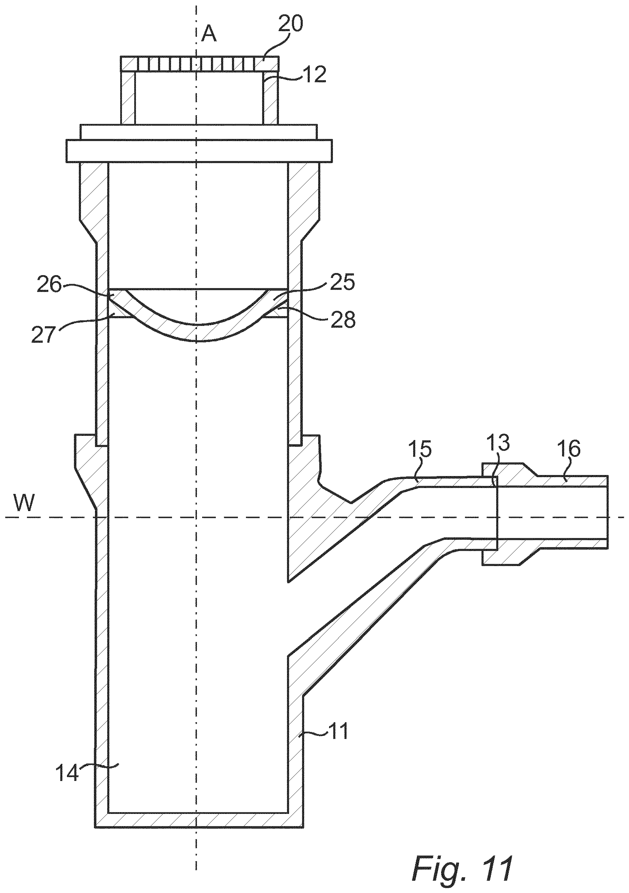

With reference to Fig. 11 the device 25 for installation against the drain wall by friction in a position above the water line W according to an alternative embodiment is illustrated. In Fig. 11 the filter element 26 is arranged on the carrier 27 to cover the cross section area of the drain 11 entirely or substantially. For example, the filter element 26 is arranged on the ring shaped carrier 27 and covers the aperture 29 of the carrier 27.

In the drawings, the device 25 is installed in a vertical drain pipe in a position above the water line W. Alternatively, the device 25 comprises a floating carrier 27 or is arranged below the water line W, so that the entire device 25 is immersed in the water or liquid in the drain 11. According to yet another embodiment the device 25 is arranged in an optional position in a drain 11, such as in a horizontal drain pipe or in any other suitable position.

The filter element 17, 26 is arranged for filtering at least one type of pollutant from the liquid or different types of pollutants from the liquid. For example, the filter element 17, 26 comprises one or more filtering materials, such as an absorbing material, filtering peat, activated carbon or any combinations thereof. For example, the filter element comprises a synthetic fibre, such as a granular synthetic fibre. For example, the filter element 17, 26 comprises a conventional filtering material.

According to one embodiment of the invention the device 10 comprises monitoring means for optically monitoring an amount of one or more selected pollutants cumulated in the filter element 17, 26 for detecting the filter capacity of the filter element 17, 26. For example, the monitoring means is included in an RFID transponder having an 10-number and the monitoring means to detect when the filter element is full and send a signal to a central monitoring unit when a predetermined amount of a pollutant has been exceeded or a sudden change of the optical characteristics of the filter element has been detected. When a predetermined optical value has been exceeded it can indicate that the filter element 17 is full and needs to be replaced. The detection of a sudden optical change can indicate a substantial and local discharge of pollutants, which can be related to an event, such as a traffic accident or any other event.

## Claims

1. A device (10, 25) for removing pollutants from a liquid inside a drain, wherein the device (10, 25) comprises a filter element (17, 26) and a carrier (18, 27) for carrying the filter element (17, 26), wherein the filter element (17, 26) is fastened to the carrier (18, 27) and is foldable, **characterised in that** the carrier (18, 27) comprises an expandable element (19, 28) arranged for expansion in at least a radial direction inside the drain, the expandable element (19, 28) being arranged so that the device (10, 25) is adjustable between the first volume state and the second volume state, wherein the second volume is greater than the first volume,
the carrier (18, 27) is a floating carrier, wherein the expandable element (19, 28) provides floating properties of the device (10, 25),
the filter element (17, 26) is folded when the expandable element (19, 28) is in a non-expanded state and unfolded when the expandable element (19, 28) is in an expanded state, and due to expansion of the expandable element (19, 28) the filter element (17, 26) is unfolded, wherein, as the expandable element (19, 28) is expanded, the filter element (17, 26) is unfolded radially to cover an entire part of a cross-section area of the drain, and
the device (10, 25) comprises monitoring means for optically monitoring an amount of one or more selected pollutants cumulated in the filter element (17, 26).

2. A device (10, 25) according to claim 1, wherein the expandable element (19, 28) comprises one or more inflatable elements which form inflatable compartments in the carrier (18, 27), wherein such inflatable compartments are interconnected by non- return valves.

3. A device (10, 25) according to claim 2, wherein the device (10, 25) comprises a gas cartridge and wherein the expandable element (19, 28) is connected to said gas cartridge for inflation thereof.

4. A device (10) according to any one of the preceding claims, wherein the carrier (18) comprises a foldable rib structure (21) connected to the expandable element (19), the filter element (17) being connected to said rib structure (21).

5. A device (10) according to claim 4, wherein the foldable rib structure (21) is arranged to at least unfold when the expandable element (19) is expanded.

6. A device (10) according to any of the preceding claims, wherein the carrier (18) comprises a weight at the bottom to stabilize the device (10) in water inside the drain.

7. A device (10, 25) according to any of the preceding claims, wherein the filter element (17, 26) comprises an absorbing material, a heavy metal filtering peat and activated carbon.

8. A device (10, 25) according to any of the preceding claims, wherein the monitoring means is included in an RFID transponder.

9. A method of removing pollutants from a liquid in a drain (11), including the steps of:
a) providing a foldable filter element (17, 26),
b) providing a carrier (18, 27) for carrying the filter element (17, 26), wherein the carrier (18, 27) comprises an expandable element (19, 28), and the carrier (18, 27) is a floating carrier,
c) arranging the foldable filter element (17, 26) on the floatable carrier (18, 27),
d) arranging the carrier (18, 27) with the filter element (17, 26) in a desired position, the expandable element (19, 28) being in a non-expanded state and the filter element (17, 26) being in a folded state, and inserting a device (10, 25) comprising the foldable filter element (17, 26) and the carrier (18, 27)
e) at the desired position inside the drain (11) expanding the expandable element (19, 28) in a radial direction to an expanded state to increase the volume of the carrier (18, 27) from a first volume state to a second volume state, wherein the second volume is greater than the first volume, and unfold the filter element (17, 26),
f) filtering the liquid inside the drain at the desired position by means of the unfolded filter element (17, 26), and
g) monitoring an amount of one or more selected pollutants cumulated in the filter element (17, 26).

10. A method according to claim 9, including the step of expanding the expandable element (19, 28) by inflation thereof, by means of a gas cartridge.

11. A method according to any one of claims 9 to 10, wherein step g) of the method further comprises:
(i) detecting when the filter element (17, 26) is full; and
(ii) sending a signal to a central monitoring unit when a predetermined amount of a pollutant has been exceeded or a sudden change of optical characteristics of the filter element (17, 26) has been detected.

## Patentansprüche

1. Vorrichtung (10, 25) zum Entfernen von Verschmutzungen aus einer Flüssigkeit innerhalb eines Ablaufs, wobei die Vorrichtung (10, 25) ein Filterelement (17, 26) und einen Träger (18, 27) zum Tragen des Filterelements (17, 26) umfasst, wobei das Filterelement (17, 26) am Träger (18, 27) befestigt ist und zusammenklappbar ist, **dadurch gekennzeichnet, dass**
der Träger (18, 27) ein ausdehnbares Element (19, 28) umfasst, das zum Ausdehnen in zumindest einer radialen Richtung innerhalb des Ablaufs ausgelegt ist, wobei das ausdehnbare Element (19, 28) so angeordnet ist, dass die Vorrichtung (10, 25) zwischen dem ersten Volumenzustand und dem zweiten Volumenzustand einstellbar ist, wobei das zweite Volumen größer ist als das erste Volumen,
der Träger (18, 27) ein schwimmender Träger ist, wobei das ausdehnbare Element (19, 28) für die Schwimmeigenschaften der Vorrichtung (10, 25) sorgt,
das Filterelement (17, 26) zusammengeklappt ist, wenn sich das ausdehnbare Element (19, 28) in einem nicht ausgedehnten Zustand befindet, und auseinandergeklappt, wenn sich das ausdehnbare Element (19, 28) in einem ausgedehnten Zustand befindet, und aufgrund einer Ausdehnung des ausdehnbaren Elements (19, 28) das Filterelement (17, 26) auseinandergeklappt wird, wobei das Filterelement (17, 26), wenn das ausdehnbare Element (19, 28) ausgedehnt wird, radial auseinandergeklappt wird und so den gesamten Teil der Querschnittsfläche des Ablaufs abdeckt, und
die Vorrichtung (10, 25) Überwachungsmittel zum optischen Überwachen einer Menge von einem oder mehreren ausgewählten Verschmutzungen umfasst, die sich in dem Filterelement (17, 26) angesammelt haben.

2. Vorrichtung (10, 25) nach Anspruch 1, wobei das ausdehnbare Element (19, 28) ein oder mehrere aufblasbare Elemente umfasst, die aufblasbare Kammern in dem Träger (18, 27) bilden, wobei diese aufblasbaren Kammern über Rückschlagventile miteinander verbunden sind.

3. Vorrichtung (10, 25) nach Anspruch 2, wobei die Vorrichtung (10, 25) eine Gaskartusche umfasst und wobei das ausdehnbare Element (19, 28) zwecks Aufblasen desselben mit der Gaskartusche verbunden ist.

4. Vorrichtung (10) nach einem der vorhergehenden Ansprüche, wobei der Träger (18) eine zusammenklappbare Rippenstruktur (21) umfasst, die mit dem ausdehnbaren Element (19) verbunden ist, wobei das Filterelement (17) mit der Rippenstruktur (21) verbunden ist.

5. Vorrichtung (10) nach Anspruch 4, wobei die zusammenklappbare Rippenstruktur (21) so angeordnet ist, dass sie zumindest auseinanderklappt, wenn das ausdehnbare Element (19) ausgedehnt wird.

6. Vorrichtung (10) nach einem der vorhergehenden Ansprüche, wobei der Träger (18) unten ein Gewicht zum Stabilisieren der Vorrichtung (10) in Wasser innerhalb des Ablaufs umfasst.

7. Vorrichtung (10, 25) nach einem der vorhergehenden Ansprüche, wobei das Filterelement (17, 26) ein absorbierendes Material, einen Schwermetallfiltertorf und Aktivkohle umfasst.

8. Vorrichtung (10, 25) nach einem der vorhergehenden Ansprüche, wobei das Überwachungsmittel in einem RFID-Transponder enthalten ist.

9. Verfahren zum Entfernen von Verschmutzungen aus einer Flüssigkeit innerhalb eines Ablaufs (11), das folgende Schritte umfasst:
a) Bereitstellen eines zusammenklappbaren Filterelements (17, 26),
b) Bereitstellen eines Trägers (18, 27) zum Tragen des Filterelements (17, 26), wobei der Träger (18, 27) ein ausdehnbares Element (19, 28) umfasst und der Träger (18, 27) ein schwimmender Träger ist,
c) Anordnen des zusammenklappbaren Filterelements (17, 26) auf dem schwimmfähigen Träger (18, 27),
d) Anordnen des Trägers (18, 27) mit dem Filterelement (17, 26) in einer gewünschten Position, wobei sich das ausdehnbare Element (19, 28) in einem nicht ausgedehnten Zustand befindet und sich das Filterelement (17, 26) in einem zusammengeklappten Zustand befindet, und Einsetzen einer Vorrichtung (10, 25), die das zusammenklappbare Filterelement (17, 26) und den Träger (18, 27) umfasst,
e) an der gewünschten Position innerhalb des Ablaufs (11) Ausdehnen des ausdehnbaren Elements (19, 28) in einer radialen Richtung in einen ausgedehnten Zustand zum Vergrößern des Volumens des Trägers (18, 27) von einem ersten Volumenzustand in einen zweiten Volumenzustand, wobei das zweite Volumen größer ist als das erste Volumen, und zum Auseinanderklappen des Filterelements (17, 26),
f) Filtern der Flüssigkeit innerhalb des Ablaufs an der gewünschten Position mit dem auseinandergeklappten Filterelement (17, 26), und
g) Überwachen einer Menge von einem oder mehreren ausgewählten Verschmutzungen, die sich in dem Filterelement (17, 26) angesammelt haben.

10. Verfahren nach Anspruch 9, das den Schritt des Ausdehnens des ausdehnbaren Elements (19, 28) durch Aufblasen desselben mit einer Gaskartusche umfasst.

11. Verfahren nach Anspruch 9 oder 10, wobei Schritt g) des Verfahrens ferner Folgendes umfasst:
(i) Erfassen, wann das Filterelement (17, 26) voll ist; und
(ii) Senden eines Signals an eine zentrale Überwachungseinheit, wenn eine vorgegebene Menge einer Verunreinigung überschritten wurde oder eine plötzliche Veränderung optischer Eigenschaften des Filterelements (17, 26) erfasst wurde.

## Revendications

1. Dispositif (10, 25) permettant d'éliminer des polluants d'un liquide à l'intérieur d'un drain, dans lequel le dispositif (10, 25) comprend un élément de filtration (17, 26) et un support (18, 27) destiné à supporter l'élément de filtration (17, 26), ledit élément de filtration (17, 26) étant fixé au support (18, 27) et étant pliable, **caractérisé en ce que**
le support (18, 27) comprend un élément expansible (19, 28) agencé pour être expansible dans au moins un sens radial à l'intérieur du drain, l'élément expansible (19, 28) étant agencé de manière que le dispositif (10, 25) soit réglable entre un premier état volumique et un deuxième état volumique, le deuxième volume étant supérieur au premier volume,
le support (18, 27) est un support flottant, l'élément expansible (19, 28) conférant des propriétés de flottaison au dispositif (10, 25),
l'élément de filtration (17, 26) est plié lorsque l'élément expansible (19, 28) est à l'état non expansé et est déplié lorsque l'élément expansible (19, 28) est à l'état expansé, et l'expansion de l'élément expansible (19, 28) a pour effet d'entraîner le dépliage de l'élément de filtration (17, 26), en sachant que, lorsque l'élément expansible (19, 28) est expansé, l'élément de filtration (17, 26) est déplié radialement pour couvrir l'intégralité d'une partie de la section transversale du drain, et
le dispositif (10, 25) comprend un moyen de surveillance permettant de surveiller optiquement la quantité d'un ou plusieurs polluants sélectionnés accumulés dans l'élément de filtration (17, 26).

2. Dispositif (10, 25) selon la revendication 1, dans lequel l'élément expansible (19, 28) comprend un ou plusieurs éléments gonflables formant des compartiments gonflables dans le support (18, 27), ces compartiments gonflables étant en liaison entre eux par des clapets de non retour.

3. Dispositif (10, 25) selon la revendication 2, dans lequel le dispositif (10, 25) comprend une cartouche de gaz et dans lequel l'élément expansible (19, 28) est relié à ladite cartouche de gaz pour en permettre le gonflage.

4. Dispositif (10) selon l'une quelconque des revendications précédentes, dans lequel le support (18) comprend une structure à nervures (21) pliable reliée à l'élément expansible (19), l'élément de filtration (17) étant relié à ladite structure à nervures (21).

5. Dispositif (10) selon la revendication 4, dans lequel la structure à nervures (21) pliable est agencée pour au moins se déplier lorsque l'élément expansible (19) est expansé.

6. Dispositif (10) selon l'une quelconque des revendications précédentes, dans lequel le support (18) comprend un poids en son extrémité inférieure afin de stabiliser le dispositif (10) dans l'eau à l'intérieur du drain.

7. Dispositif (10, 25) selon l'une quelconque des revendications précédentes, dans lequel l'élément de filtration (17, 26) comprend un matériau absorbant, de la tourbe de filtration des métaux lourds et du charbon actif.

8. Dispositif (10, 25) selon l'une quelconque des revendications précédentes, dans lequel le moyen de surveillance est inclus dans un transpondeur RFID.

9. Procédé permettant d'éliminer des polluants d'un liquide dans un drain (11), comprenant les étapes consistant à :
a) mettre à disposition un élément de filtration (17, 26) pliable,
b) mettre à disposition un support (18, 27) destiné à supporter l'élément de filtration (17, 26), ledit support (18, 27) comprenant un élément expansible (19, 28), et le support (18, 27) étant un support flottant,
c) agencer l'élément de filtration (17, 26) pliable sur le support flottant (18, 27),
d) agencer le support (18, 27) porteur de l'élément de filtration (17, 26) dans une position souhaitée, l'élément expansible (19, 28) étant à l'état non expansé et l'élément de filtration (17, 26) étant à l'état plié, et introduire un dispositif (10, 25) comprenant l'élément de filtration (17, 26) pliable et le support (18, 27),
e) à la position souhaitée à l'intérieur du drain (11), entraîner l'expansion de l'élément expansible (19, 28) dans un sens radial pour parvenir à un état expansé faisant augmenter le volume du support (18, 27), d'un premier état volumique à un deuxième état volumique, le deuxième volume étant supérieur au premier volume, et pour déplier l'élément de filtration (17, 26),
f) filtrer le liquide à l'intérieur du drain à la position souhaitée au moyen de l'élément de filtration (17, 26) déplié, et
g) surveiller la quantité d'un ou plusieurs polluants sélectionnés accumulés dans l'élément de filtration (17, 26).

10. Procédé selon la revendication 9, comprenant l'étape d'expansion de l'élément expansible (19, 28) grâce à son gonflage au moyen d'une cartouche de gaz.

11. Procédé selon l'une quelconque des revendications 9 et 10, dans lequel l'étape g) du procédé comprend en outre :
(i) la détection du moment où l'élément de filtration (17, 26) est plein, et
(ii) l'émission d'un signal auprès d'une unité de surveillance centrale lorsqu'une quantité prédéterminée de polluant a été dépassée ou qu'un changement soudain des caractéristiques optiques de l'élément de filtration (17, 26) a été détecté.
